# DEMANDE DE BREVET EUROPEEN

(11) **EP 2 544 115 A1**
(43) Date de publication de la demande: **09.01.2013**
(21) Numéro de dépôt: 11305869.7
(22) Date de dépôt: 06.07.2011
(51) Int. Cl.: G06F 21/00, G06F 9/50, G06F 9/38

(54) **Procédé d'exécution d'un traitement dans un dispositif sécurisé**

(71) Demandeur: Gemalto SA, 92190 Meudon (FR)
(72) Inventeur: Villegas Karine, 13420 Gemenos (FR); Pahaut, Olivier, 83270 Saint Cyr sur Mer (FR)

(57) **Abrégé**

L'invention est un procédé pour exécuter un traitement dans un dispositif sécurisé qui contient un microprocesseur. Le traitement comprend une tâche ayant un premier type. Ce premier type correspond aux opérations exécutables par le microprocesseur ou par un composant spécifiquement conçu pour le premier type. Le dispositif sécurisé comprenant également une unité matérielle de calcul spécifiquement conçue pour exécuter des opérations d'un second type. Ce second type est distinct du premier type. Le procédé comprend les étapes de :
- sélection d'une ressource associée à la tâche, la ressource comprenant l'unité matérielle de calcul,
- attribution de la ressource sélectionnée à la tâche, et
- exécution de la tâche au moyen de l'unité matérielle de calcul en exécutant au moins une des opérations du second type.

## Description

### (Domaine technique de l'invention)

La présente invention concerne les procédés d'exécution de traitements dans un dispositif sécurisé. Notamment, la présente invention concerne les procédés d'exécution de traitements dans un dispositif sécurisé comprenant au moins une unité de calcul spécialisée dans un type de calcul particulier.

### (Etat de la technique antérieur)

Un dispositif sécurisé est un appareil capable de contrôler l'accès aux données qu'il contient. Ces données peuvent être de natures variées et protégées par de multiples mécanismes tels que la présentation d'un code secret ou l'établissement d'une session sécurisée pour communiquer avec le dispositif. La plupart des dispositifs sécurisés possèdent des moyens de calculs (ou unités de calcul) capables d'effectuer des opérations complexes. Par exemple, certains dispositifs possèdent un crypto coprocesseur conçu pour effectuer des opérations de cryptographie symétrique. De même, certains dispositifs possèdent un crypto coprocesseur conçu pour effectuer des opérations de cryptographie asymétrique. Le plus souvent, les dispositifs sécurisés possèdent un microprocesseur principal qui gère l'ensemble des opérations à réaliser. Notamment le microprocesseur délègue les opérations aux unités de calcul qui sont spécialisées pour le type d'opération à réaliser. Par exemple, le microprocesseur délègue au crypto coprocesseur symétrique les opérations nécessitant un calcul de type symétrique. De la même façon le microprocesseur s'appuie sur le crypto coprocesseur asymétrique pour exécuter les opérations nécessitant un calcul de type asymétrique. Ces calculs nécessitent parfois un temps important pour l'exécution complète du traitement auquel ils sont rattachés.

Il y a un besoin d'amélioration de l'exécution des traitements dans un dispositif sécurisé.

### (Invention)

L'invention a pour objet un procédé pour exécuter un traitement dans un dispositif sécurisé comprenant un microprocesseur. Le traitement comprend une tâche ayant un premier type. Le premier type correspond aux opérations exécutables par le microprocesseur ou par un composant spécifiquement conçu pour le premier type. Le dispositif sécurisé comprend une unité matérielle de calcul spécifiquement conçue pour exécuter des opérations d'un second type. Le second type est distinct du premier type. Le procédé comprend les étapes de :
- sélection d'une ressource associée à la tâche, la ressource comprenant l'unité matérielle de calcul spécifiquement conçue pour exécuter des opérations du second type,
- attribution de la ressource sélectionnée à la tâche,
- exécution de la tâche au moyen de l'unité matérielle de calcul en exécutant au moins une des opérations du second type.

Avantageusement, l'étape de sélection peut être précédée d'une étape d'établissement d'un ensemble de ressources associé à la tâche, et l'étape de sélection peut consister à sélectionner une unique ressource parmi les ressources de l'ensemble associé à la tâche.

Avantageusement, le traitement peut comprendre une pluralité de tâches. Le dispositif sécurisé peut comprendre une seconde unité matérielle de calcul spécifiquement conçue pour exécuter des opérations d'un troisième type; le troisième type étant distinct des premier et second types. L'étape d'établissement d'un ensemble de ressources peut être réalisé pour chacune des tâches du traitement, chacune desdites ressources comprenant une ou plusieurs des unités matérielles de calcul.

Avantageusement, le second type peut être le type cryptographie symétrique et le troisième type peut être le type cryptographie asymétrique.

Avantageusement, au moins deux des tâches du traitement peuvent être exécutées en parallèle.

Avantageusement, l'étape d'établissement de l'ensemble de ressources associé à une tâche ciblée peut être réalisée en prenant en compte au moins un des critères suivants : le temps d'exécution de la tâche ciblée, l'occupation mémoire nécessitée par l'exécution de la tâche ciblée et le niveau de sécurité requis pour d'exécution de la tâche ciblée.

Avantageusement, l'étape de sélection de ressource peut être réalisée dans le dispositif sécurisé en prenant en compte un facteur aléatoire.

L'invention a également pour objet un dispositif sécurisé comprenant un microprocesseur et apte à exécuter un traitement comprenant une tâche ayant un premier type. Ledit premier type correspond aux opérations exécutables par le microprocesseur ou par un composant spécifiquement conçu pour le premier type. Le dispositif sécurisé comprend une unité matérielle de calcul spécifiquement conçue pour exécuter des opérations d'un second type. Ledit second type est distinct du premier type. Le dispositif sécurisé comprend :
- un moyen de stockage d'un ensemble de ressources associé à ladite tâche; une des ressources comprenant l'unité matérielle de calcul,
- un moyen de sélection apte à sélectionner une unique ressource parmi l'ensemble de ressources associé à la tâche), le moyen de sélection étant apte à attribuer la ressource sélectionnée à la tâche, et
- un moyen de délégation apte à déclencher l'exécution d'au moins une des opérations du second type de l'unité matérielle de calcul pour exécuter la tâche.

Avantageusement, le dispositif sécurisé peut comprendre un moyen d'identification apte à établir l'ensemble de ressources associé à la tâche.

Avantageusement, le moyen d'identification peut prendre en compte au moins un des critères suivants pour l'établissement de l'ensemble de ressources associé à une tâche ciblée : le temps d'exécution de la tâche ciblée, l'occupation mémoire nécessitée par l'exécution de la tâche ciblée et le niveau de sécurité requis pour d'exécution de la tâche ciblée.

Avantageusement, le moyen de sélection peut être apte à prendre en compte un facteur aléatoire.

### (Brève description des figures)

D'autres caractéristiques et avantages de la présente invention apparaîtront plus clairement à la lecture des modes de réalisations décrits ci-après.

En accompagnement de ces modes de réalisations, quatre figures sont proposées.
- La figure 1 décrit schématiquement un exemple d'architecture pour un dispositif sécurisé selon l'invention,
- la figure 2 décrit schématiquement un exemple de traitement destiné à être exécuté selon le procédé de l'invention,
- la figure 3 décrit schématiquement un exemple d'ensembles de ressources établis selon le procédé de l'invention, et
- la figure 4 décrit schématiquement un exemple de liste des ressources allouées à l'exécution de chaque tâche du traitement selon le procédé de l'invention.

### (Description détaillée de modes de réalisations de l'invention)

L'invention s'applique à tous types de dispositifs sécurisés possédant un microprocesseur et au moins une unité de calcul conçue pour effectuer des opérations d'un type particulier. Les unités de calcul sont des composants matériels. Par exemple, une unité de calcul peut être conçue pour effectuer des opérations de cryptographie symétrique, ou pour effectuer des opérations de cryptographie asymétrique, ou des opérations de calcul de valeur d'intégrité ou des opérations de générations de valeurs aléatoires. L'invention s'applique notamment aux cartes à puces, aux téléphones portables, aux composants Machine-To-Machine (connus sous l'appellation « composants M2M ») et aux tablettes PC contenant des données sécurisées.

Selon une particularité de l'invention, l'utilisation d'une unité de calcul spécialisée est détournée par rapport à l'usage pour lequel elle est initialement conçue.

Dans le cadre de l'invention, on considère toutes les opérations exécutables par le microprocesseur du dispositif sécurisé comme faisant partie d'un premier type. Le dispositif sécurisé comporte au moins une unité de calcul spécialisée qui est conçue pour effectuer des opérations d'un deuxième type particulier. Ce deuxième type est différent du premier type. Par exemple, l'unité de calcul spécialisée peut être capable d'effectuer des opérations de type cryptographie à clé publique. Il est à noter que cette unité de calcul peut être aussi capable d'effectuer des opérations du premier type, c'est-à-dire des opérations exécutables par le microprocesseur. Par exemple, l'unité de calcul peut être capable d'effectuer des opérations de permutation. Selon l'invention, il est possible de faire exécuter une tâche du premier type en faisant exécuter au moins une opération du deuxième type par l'unité de calcul spécialisée.

De même selon l'invention, lorsque le dispositif sécurisé comporte deux unités de calcul spécialisées dans des types d'opérations différents, il est possible d'exploiter l'une des unités de calcul pour exécuter une tâche correspondant au type de l'autre unité de calcul et réciproquement.

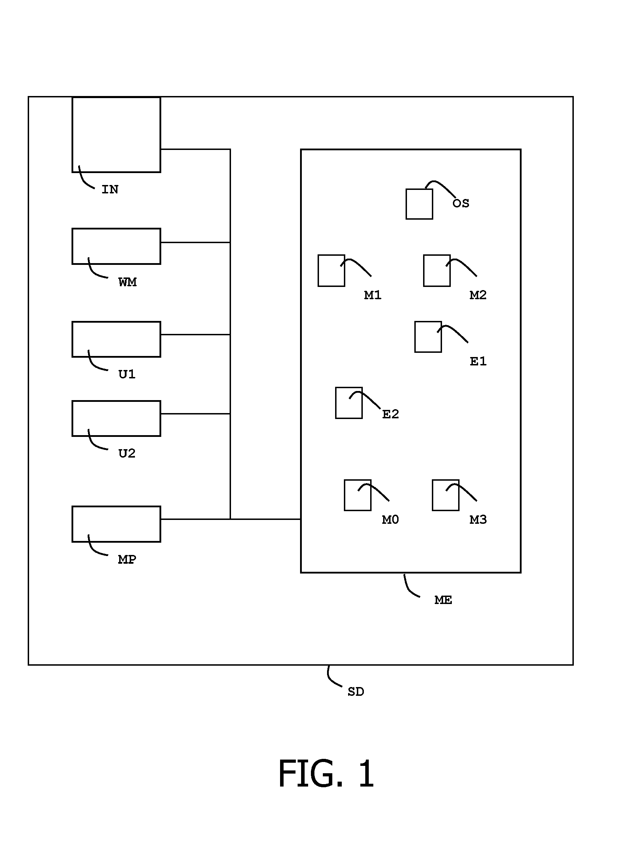

La **figure 1** propose un exemple schématique de l'architecture d'un dispositif sécurisé SD selon l'invention. Dans cet exemple, le dispositif sécurisé est une carte à puce. Cet exemple n'est pas limitatif.

Le dispositif sécurisé SD comprend une mémoire de travail WM, une mémoire non volatile ME, un microprocesseur MP, deux unités de calcul U1 et U2 ainsi qu'une interface de communication IN. Cette interface de communication IN permet au dispositif sécurisé SD de dialoguer avec un autre appareil tel qu'un lecteur par exemple.

La mémoire de travail WM est du type RAM. La mémoire non volatile ME est de préférence une mémoire flash et peut être composée de un ou plusieurs composants mémoire distincts. La mémoire non volatile ME comprend un système d'exploitation OS et quatre moyens M0, M1, M2 et M3.

Le système d'exploitation peut être de type exclusivement natif ou comporter une machine virtuelle telle qu'une machine virtuelle Java ® par exemple.

L'unité de calcul U1 est un coprocesseur DES (« Data Encryption Standard » en langue anglaise) conçu pour effectuer des calculs pour des clés symétriques ou selon des algorithmes symétriques. L'unité de calcul U1 est apte à exécuter des opérations de type cryptographie symétrique.

L'unité de calcul U2 est un coprocesseur Clé Publique (aussi nommé PK pour « Public Key » en langue anglaise) destiné à effectuer des calculs pour des clés asymétriques ou selon des algorithmes asymétriques. L'unité de calcul U2 est apte à exécuter des opérations de type cryptographie asymétrique.

Le dispositif sécurisé SD est destiné à exécuter des traitements composés d'une ou plusieurs tâches. Par exemple, un traitement peut être la génération d'une série de clés symétriques. L'exécution d'une tâche nécessite une ressource apte à effectuer les opérations nécessaires. Cette ressource peut être constituée d'une ou plusieurs unités de calcul. Il est parfois possible d'identifier plusieurs ressources susceptibles d'exécuter une même tâche.

Le traitement TR est par exemple défini par une application installée dans le dispositif SD. Le traitement TR peut aussi être défini par le système d'exploitation OS afin de réagir à une commande reçue via l'interface IN.

Le moyen M0 est un moyen de stockage qui est apte à réaliser le stockage d'une ressource ou d'un ensemble de ressources associées à une tâche.

Le moyen M1 est un moyen de sélection qui est apte à sélectionner une unique ressource parmi les ressources appartenant à l'ensemble associé à une tâche donnée. Le moyen M1 est également capable d'attribuer la ressource sélectionnée à la tâche en question.

Le moyen M2 est un moyen d'identification qui est apte à établir un ensemble de ressources associé à une tâche donnée. Chaque ressource comprend une ou plusieurs unités de calcul. En d'autre terme, le moyen d'identification M2 est capable de d'associer un ensemble de ressources à chaque tâche d'un traitement.

Le moyen M3 est un moyen de délégation qui est apte à déclencher l'exécution d'au moins une opération du type propre à chacune des unités de calcul U1 et U2.

Selon l'invention, le microprocesseur MP est considéré comme une unité de calcul ayant la particularité de ne pas être spécialisée. Le dispositif SD de la figure 1 comporte donc trois unités de calcul qui peuvent former seule ou en combinaison une ressource disponible pour l'exécution d'une tâche.

Sur la figure 1, la mémoire non volatile ME comprend également deux ensembles de ressources E1 et E2 qui sont détaillés dans les figures suivantes.

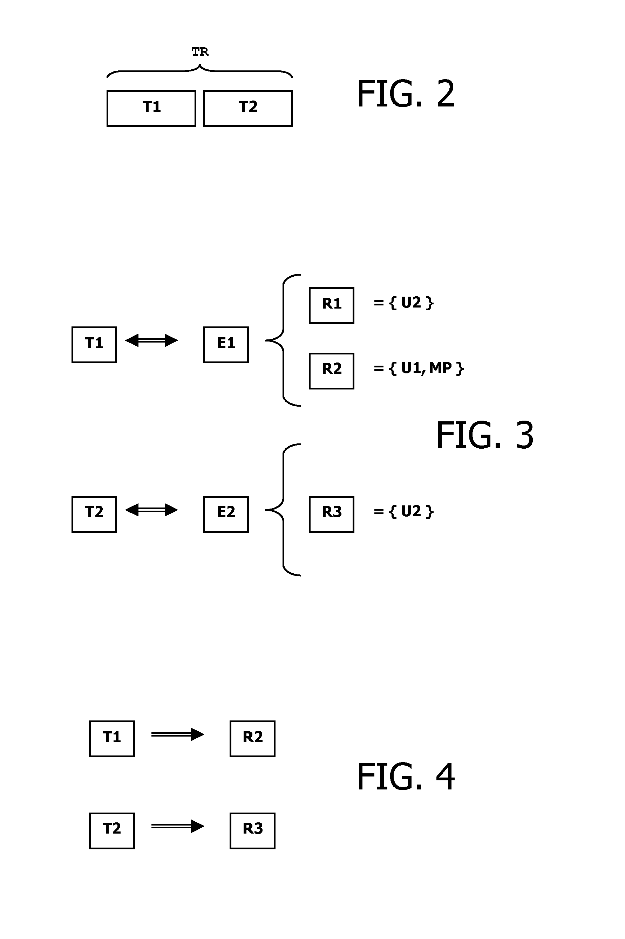

La **figure 2** propose un exemple de traitement TR destiné à être exécuté selon le procédé de l'invention.

Le traitement TR comprend deux tâches T1 et T2 susceptibles d'être exécutées séparément dans le dispositif sécurisé SD de la figure 1. Par exemple, le traitement TR peut comprendre la génération de 20 durées aléatoires et la génération de trois clés Triple-DES. Dans ce cas, le traitement TR comprend une première tâche T1 consistant à produire une série de vingt durées de tailles aléatoires et une seconde tâche T2 consistant à générer des clés symétriques.

La **figure 3** propose un exemple d'ensembles de ressources établis selon le procédé de l'invention. Conformément au procédé selon l'invention, un ensemble d'une ou plusieurs ressources est établi pour chacune des tâches du traitement TR. Pour la tâche T1, un ensemble E1 est identifié. Cet ensemble E1 comprend deux ressources R1 et R2. En d'autre terme, la tâche T1 peut être exécutée selon deux alternatives possibles : en utilisant la ressource R1 ou bien en utilisant la ressource R2. Dans l'exemple de la figure 3, la ressource R1 est constituée de l'unité de calcul U2 et la ressource R2 est constituée de l'association de l'unité de calcul U1 et du microprocesseur MP.

Pour la tâche T2, un ensemble E2 a été identifié. Cet ensemble E2 comprend une seule ressource R3. En d'autre terme, la tâche T2 peut être exécutée selon une seule configuration possible. Dans l'exemple de la figure 3, la ressource R3 est constituée de l'unité de calcul U2.

L'étape d'identification des ensembles de ressources associés à chaque tâche peut se faire en prenant en compte un ou plusieurs des critères suivants : le temps d'exécution par l'unité de calcul, la taille mémoire requise et le niveau de sécurité souhaité. Une même tâche est exécutée par différentes unités de calcul en un temps qui dépend des caractéristiques de chaque unité. La taille mémoire requise correspond à la taille consommée dans les différentes mémoires présentes dans le dispositif SD. Enfin le niveau de sécurisation de l'exécution d'une tâche varie selon la nature de la ressource utilisée. Par exemple, le transfert de données entre deux zones mémoire à l'aide d'un processeur principal MP qui traiterait les données 8 bits par 8 bits est moins sécurisé que transférer ces mêmes données en utilisant un crypto processeur asymétrique qui traite les données par exemple par blocs de 128 bits. En effet, sont connues les attaques par dictionnaire ou « template attacks » qui lors d'un traitement d'un octet offre seulement 256 cas possibles et peuvent permettre de retrouver la valeur de l'octet transféré. Dans le cas du traitement par blocs de 128 bits, ce genre d'attaque n'est plus envisageable.

La **figure 4** propose un exemple de liste des ressources allouées à l'exécution de chaque tâche du traitement TR selon le procédé de l'invention.

Conformément au procédé selon l'invention, une unique ressource est sélectionnée pour l'exécution de chacune des tâches du traitement TR. Ainsi, dans l'exemple de la figure 4, il est prévu que la tâche T1 soit exécutée par la ressource R2 et que la tâche T2 soit exécutée par la ressource R3.

Ainsi, la génération de la série de vingt durées de tailles aléatoires (i.e. tâche T1) peut être réalisée par le couple constitué de l'association du coprocesseur DES U1 et du microprocesseur MP.

Chaque durée aléatoire sera caractérisée par une génération d'un aléa dont dépendra la configuration du coprocesseur DES U1 (chargement de clefs, de données, configuration, nombre d'exécutions ...). Chaque exécution d'une durée aléatoire sera caractérisée par un ou des appels au coprocesseur DES U1 avec des clefs et des données variables. L'intérêt de tels délais aléatoires est de générer des traces de fuites par canaux cachés de même type que celles présentes dans des exécutions d'algorithmes symétriques. Par ailleurs, ils peuvent être parallélisés à des exécutions réalisées par le microprocesseur MP ou un par d'autres ressources du dispositif SD.

Et la génération des trois clés Triple-DES (i.e. tâche T2) peut être réalisée par le coprocesseur Clé Publique U2. Dans ce cas, on pourra par exemple prendre la clef de référence masquée et appliquer une opération arithmétique et/ou logique et déterministe permettant d'obtenir une donnée de taille trois fois la taille d'une clef d'un triple DES. Si nous notons K la clef d'un triple DES, on peut obtenir une donnée de taille 3x |K| en utilisant deux multiplications fournies par le coprocesseur à clef publique U2.

Dans ce dernier cas, l'invention offre non seulement un gain en termes de temps d'exécution mais aussi en termes d'occupation mémoire. En effet, la fonction de multiplication est déjà définie dans le coprocesseur U2 en matériel. Elle a juste besoin d'être lancée par le processeur MP. Il n'y a pas besoin de code particulier pour générer ces clefs dans le système d'exploitation. Ceci a pour avantage de réduire la taille du système d'exploitation OS et donc de libérer de l'espace dans la mémoire non volatile du dispositif sécurisé.

Avantageusement, la sélection de ressources pour les tâches peut se faire de manière aléatoire. De la sorte deux exécutions du même traitement pourront être réalisées avec des ressources différentes. La robustesse de l'exécution des traitements est ainsi renforcée contre les attaques du fait de signatures changeantes en terme d'unités de calcul qui sont sollicitées et du moment où ces unités de calcul sont activées. En particulier, le choix de la ressource à utiliser peut se faire au dernier moment, c'est-à-dire dynamiquement, soit lorsque le dispositif sécurisé s'apprête à lancer l'exécution du traitement, soit au cours de l'exécution du traitement. Par exemple, si le traitement comprend un grand nombre de tâches, les choix des ressources allouées aux dernières tâches peuvent se faire après exécution des premières tâches.

Une autre particularité de l'invention est de permettre de détourner l'utilisation d'une unité de calcul spécialisée par rapport à l'usage pour lequel elle est initialement prévue. Cela a pour premier avantage de pouvoir exploiter une unité de calcul plus souvent que dans l'art antérieur. Sans l'invention, une unité de calcul ne peut être sollicitée que si une tâche de type correspondant doit être exécutée. Cela autorise donc une meilleure exploitation des composants présents sur le dispositif sécurisé. Le deuxième avantage est de brouiller les informations disponibles pour un éventuel attaquant malintentionné. En effet, de l'extérieur, on constate qu'une unité de calcul dédiée à un type d'opération est activée alors que la tâche réellement exécutée est de type différent.

Grâce à l'invention, il est possible d'utiliser toutes sortes de composants matériels pour l'exécution d'un traitement. Par exemple, le traitement peut être réparti sur un coprocesseur CRC (« Cyclic Redundancy Check » en langue anglaise), un coprocesseur DES, un coprocesseur AES (« Advanced Encryption Standard » en langue anglaise), un coprocesseur à clef publique ou même un générateur de nombres aléatoires (aussi appelé en langue anglaise « Random Generator » ou RNG) disponibles à bord du dispositif sécurisé.

Grâce à l'invention, il est possible d'effectuer des calculs de vérification d'intégrité en utilisant des opérations arithmétiques exécutées par un coprocesseur Clé publique en remplacement de l'usage traditionnel du microprocesseur.

Un autre exemple de détournement des unités de calcul est la génération de masques par une unité de chiffrement symétrique de blocs; ces masques étant destinés à masquer toute ou partie de clés.

Un autre exemple d'exploitation des unités de calcul dans un mode inattendu est la génération de durées aléatoires par un coprocesseur DES ou un coprocesseur AES ou encore par un coprocesseur à clé publique.

Un avantage complémentaire de l'invention est de faciliter la délégation en parallèle de plusieurs tâches afin de réduire le temps global de l'exécution d'un traitement. Le microprocesseur peut être soulagé de certaines tâches et devenir ainsi disponible pour orchestrer la délégation de tâches vers les autres unités de calcul. Cet avantage illustre le fait qu'il devient plus difficile de construire un clone du dispositif contenant l'invention. En effet en n'ayant pas toutes les ressources disponibles capables d'effectuer les mêmes tâches et de la même façon dans un temps très restreint, le clone ne pourra pas être utilisable.

Avantageusement, un traitement composé de plusieurs opérations peut être exécuté par le dispositif sécurisé selon l'invention comme un traitement composé d'une seule tâche regroupant toutes les opérations. Prenons par exemple, le transfert sécurisé d'un tampon de données constitué de plusieurs octets. Ce tampon doit être copié depuis la mémoire non volatile ME vers la mémoire de travail WM. Sans l'invention, le transfert peut comprendre les opérations suivantes : génération d'un index des octets à transférer, puis transfert octet par octet dans un ordre aléatoire. Ce transfert peut être exécuté par le microprocesseur du dispositif sécurisé.

Avec l'invention, l'ensemble de ces opérations peut être considéré comme une seule tâche qui peut être déléguée au crypto-coprocesseur Clé Publique (i.e. à l'unité de calcul U2) qui est capable d'effectuer le transfert de tous les octets du tampon en un coup. Un tel mode de réalisation offre également l'avantage de d'augmenter le niveau de sécurité du transfert de ces données au regard des attaques par canaux cachés et de réduire le temps nécessaire pour exécuter le traitement visé.

Alternativement, une opération initiale d'un traitement peut être décomposée en plusieurs tâches aptes à être réparties sur plusieurs ressources distinctes.

Bien que les exemples donnés précédemment concernent des cartes à puces, l'invention s'applique tout aussi bien à tout genre de dispositifs comportant au moins une unité de calcul spécialisée dans un type d'opérations particulier.

L'invention s'applique pour tous genres d'unité de calcul spécialisée.

## Revendications

1. **Procédé** pour exécuter un traitement (TR) dans un dispositif sécurisé (SD), le dispositif sécurisé (SD) comprenant un microprocesseur (MP), le traitement (TR) comprenant une tâche (T1) ayant un premier type, ledit premier type correspondant aux opérations exécutables par le microprocesseur (MP) ou par un composant spécifiquement conçu pour le premier type, le dispositif sécurisé (SD) comprenant une unité matérielle de calcul (U1) spécifiquement conçue pour exécuter des opérations d'un second type, ledit second type étant distinct du premier type,
**caractérisé en ce que** le procédé comprend les étapes de :
- sélection d'une ressource (R1) associée à la tâche (T1) la ressource (R1) comprenant l'unité matérielle de calcul (U1),
- attribution de la ressource (R1) sélectionnée à la tâche (T1),
- exécution de la tâche (T1) au moyen de l'unité matérielle de calcul (U1) en exécutant au moins une des opérations du second type.

2. Procédé selon la revendication 1, dans lequel l'étape de sélection est précédée d'une étape d'établissement d'un ensemble (E1) de ressources (R1, R2) associé à la tâche (T1), et dans lequel l'étape de sélection consiste à sélectionner une unique ressource parmi les ressources (R1, R2) de l'ensemble (E1) associé à la tâche (T1).

3. Procédé selon la revendication 2, dans lequel le traitement (TR) comprend une pluralité de tâches (T1, T2), dans lequel le dispositif sécurisé (SD) comprend une seconde unité matérielle de calcul (U2) spécifiquement conçue pour exécuter des opérations d'un troisième type, ledit troisième type étant distinct des premier et second types, et dans lequel l'étape d'établissement d'un ensemble (E1, E2) de ressources (R1, R2, R3) est réalisé pour chacune des tâches (T1, T2) du traitement (TR), chacune desdites ressources (R1, R2, R3) comprenant une ou plusieurs des unités matérielles de calcul (U1, U2).

4. Procédé selon la revendication 3, dans lequel le second type est le type cryptographie symétrique et le troisième type est le type cryptographie asymétrique.

5. **Procédé selon l'une quelconque des** revendications 3 ou 4, dans lequel au moins deux des tâches du traitement (TR) sont exécutées en parallèle.

6. **Procédé selon l'une quelconque des** revendications précédentes, dans lequel l'étape d'établissement de l'ensemble de ressources associé à une tâche ciblée est réalisée en prenant en compte au moins un des critères suivants : le temps d'exécution de la tâche ciblée, l'occupation mémoire nécessitée par l'exécution de la tâche ciblée et le niveau de sécurité requis pour d'exécution de la tâche ciblée.

7. **Procédé selon l'une quelconque des** revendications précédentes, dans lequel l'étape de sélection de ressource est réalisée dans le dispositif sécurisé (SD) en prenant en compte un facteur aléatoire.

8. **Dispositif sécurisé** (SD) comprenant un microprocesseur (MP), ledit dispositif sécurisé (SD) étant apte à exécuter un traitement (TR) comprenant une tâche (T1) ayant un premier type, ledit premier type correspondant aux opérations exécutables par le microprocesseur (MP) ou par un composant spécifiquement conçu pour le premier type, le dispositif sécurisé (SD) comprenant une unité matérielle de calcul (U1) spécifiquement conçue pour exécuter des opérations d'un second type, ledit second type étant distinct du premier type,
**caractérisé en ce que** le dispositif sécurisé (SD) comprend :
- un moyen de stockage (M0) d'un ensemble (E1) de ressources (R1, R2) associé à ladite tâche (T1), une des ressources comprenant l'unité matérielle de calcul (U1),
- un moyen de sélection (M1) apte à sélectionner une unique ressource parmi l'ensemble (E1) de ressources (R1, R2) associé à la tâche (T1), et apte à attribuer la ressource sélectionnée à la tâche (T1),
- un moyen de délégation (M3) apte à déclencher l'exécution d'au moins une des opérations du second type de l'unité matérielle de calcul (U1) pour exécuter la tâche (T1).

9. **Dispositif sécurisé (SD) selon la** revendication 8 comprenant un moyen d'identification (M2) apte à établir l'ensemble (E1) de ressources associé à la tâche (T1).

10. **Dispositif sécurisé (SD) selon la** revendication 9, dans lequel le moyen d'identification (M2) prend en compte au moins un des critères suivants pour l'établissement de l'ensemble de ressources associé à une tâche ciblée : le temps d'exécution de la tâche ciblée, l'occupation mémoire nécessitée par l'exécution de la tâche ciblée et le niveau de sécurité requis pour d'exécution de la tâche ciblée.

11. **Dispositif sécurisé (SD) selon** l'une quelconque des revendications 8 à 10, dans lequel le moyen de sélection (M1) est apte à prendre en compte un facteur aléatoire.
